# EUROPEAN PATENT APPLICATION

(11) **EP 2 412 589 A1**
(43) Date of publication of application: **01.02.2012**
(21) Application number: 10170951.7
(22) Date of filing: 27.07.2010
(51) Int. Cl.: B60S 9/205, B62D 59/04

(54) **Drive system for manoeuvring a trailer, trailer provided with such a drive system and method for manoeuvring such a trailer.**

(71) Applicant: Rosendaal Techniek V.O.F., 4515 NA Ijzendijke (NL)
(72) Inventor: Rosendaal, François Abraham, 4515 NA, IJzendijke (NL)
(74) Representative: Algemeen Octrooi- en Merkenbureau

(57) **Abstract**

The present invention relates to a drive system for manoeuvring a trailer, wherein the drive system comprises a frame comprising a fixed frame part for connecting the system to the chassis of the trailer and a movable frame part which is movably connected to the fixed frame part, a motor, and a drive element that is operatively connected to the motor for manoeuvring the trailer, which drive element is connected to the movable frame part and which is movable with respect to the fixed frame part from a passive position to an active position, in which active position the drive system is usable for moving the trailer. The drive element is adapted to contact the supporting surface in the active position for moving the trailer. The present invention further relates to a trailer provided with at least one such drive system and to a method for manoeuvring such a trailer.

## Description

The present invention relates to a drive system for manoeuvring a trailer, the trailer comprising a chassis and at least two wheels for supporting the trailer on a supporting surface, wherein the drive system comprises a frame comprising a fixed frame part for connecting the system to the chassis of the trailer and a movable frame part which is movably connected to the fixed frame part, a motor, and a drive element that is operatively connected to the motor for manoeuvring the trailer, which drive element is connected to the movable frame part and which is movable with respect to the fixed frame part from a passive position to an active position, in which active position the drive system is usable for moving the trailer.

The present invention further relates to a trailer provided with at least one such drive system and to a method for manoeuvring such a trailer.

It is generally known that a trailer such as a caravan is quite difficult to manoeuvre, especially when it is not coupled to a towing vehicle. Campsites often have uneven and unpaved grounds so that campers struggle with the proper positioning of a caravan at a specific desired location.

To this end a drive system for a trailer such as a caravan is known, which comprises a roller and a motor. The roller can directly engage a tyre so that the trailer can be moved by rotating the tyre by rotatably driving the roller by means of the motor. The roller is made of steel and has a relatively rough contact surface in order to increase friction between the roller and the tyre during contact. A problem of the known mover is that the adjustment of the contact between the roller and the tyre is quite delicate since sufficient friction between roller and tyre has to be balanced with acceptable wear of the tyre resulting from said contact. Insufficient friction, i.e. too little contact force results in slip of the roller over the tyre surface and thus in immediate tyre damage. In order to minimize the risk of slip the contact force is made quite high, which results in a heavy construction requirements and increased tyre wear in use. An object of the present invention is therefore to provide a drive system for manoeuvring a trailer that does not increase tyre wear in use. This object is accomplished by the drive system according to the present invention, which is characterized in that the drive element is adapted to contact the supporting surface in the active position for transmitting motive power from the motor to the supporting surface for moving the trailer, in a connected state of the system on the trailer. An advantage of the drive system of the present invention is that due to the fact that motive power is in use directly transmitted to the supporting surface and is thus not transmitted to the supporting surface by rotatably contacting a tyre of the trailer, tyre wear is not increased when the drive system is used. Furthermore no delicate adjustment of the system has to be carried out, as is the case with the above known mover. Also the weight of the construction of the system can be decreased.

Within the scope of the present invention by trailer is meant a road vehicle adapted to be towed by a towing road vehicle. The invention is in particularly suitable for use on single axle and twin axle caravans. The trailer might alternatively also have an axle at a front side and an axle at a rear side of the trailer, such as is regularly the case with market trailers.

In a highly preferable embodiment the drive element is adapted to be orientable such that the trailer is movable in its longitudinal direction, in the active position of the drive element.

It is further preferred that the drive element is adapted to be mounted in the direct vicinity of a wheel of the trailer. This increases the manoeuvrability of the trailer when the drive system is operative.

Preferably the drive element comprises an endless toothed belt. A toothed belt, preferably having a toothed profile on the side facing the supporting surface, provides sufficient friction between belt and supporting surface so that the trailer can be properly moved under various conditions, at least in the active position of the drive element. Alternatively profiled wheels can be used as drive element, for example.

In a preferred embodiment the movable frame part comprises a first arm which is pivotally connected about a first horizontal pivot axis, to the fixed frame part with a first end portion thereof, wherein the drive element is connected to a second, opposite end portion of the first arm and wherein the drive system comprises pivoting means for pivoting the first arm about the first pivot axis such that the drive element is pivotable between its passive position and its active position for providing contact between the drive element and the supporting surface in the active position of the drive element. Such a frame construction can be made in an easy and cost efficient way. It is furthermore robust. Due to the pivoting action of the first arm the drive system uses limited (vertical) space under the trailer, in the passive position. This results in a limited decrease of ground clearance of the trailer.

In case of use of the above-mentioned belt it is preferable if the belt is at least passed over a first pulley, which is rotatably connected to the second end portion of the first arm, and over a second pulley, which is rotatably provided near the first end portion of the first arm and which is operatively connected to the motor, so that the belt can be moved over the first and second pulley for moving the trailer, in the active position of the drive element. Because of this the motor can be positioned more securely, away from the second end portion of the first arm, which end portion is close to the supporting surface, in the active position.

A constructionally easy manner in which the first arm can be pivoted is realised when the pivoting means comprise a screw spindle that is connected to the fixed frame part, spindle rotating means for rotating the spindle such that the nut travels along the spindle, and a second arm, which is pivotally connected to the nut with a first end portion thereof, and which is pivotally connected to the first arm with a second, opposite end portion thereof, such that the movement of the nut along the spindle causes the first arm to pivot.

The functionality of the drive system is highly increased if the drive element is adapted to be pivotally connected to the trailer chassis about a second pivot axis, wherein the drive element is pivotable from a first position, in which the drive element can move the trailer in the longitudinal direction thereof, in the active position of the drive element, to a second position, in which the drive element can move the trailer in the transverse direction thereof, in the active position of the drive element. The second pivot axis preferably extends vertical, i.e. perpendicular to the trailer chassis when the trailer is located on a horizontal supporting surface. It is furthermore preferred if the drive element, together with the frame of the drive system, is adapted to be pivotally connected to the trailer chassis about the second pivot axis.

The present invention further relates to a trailer, in particular a caravan, comprising a chassis and at least two wheels for supporting the trailer on a supporting surface, characterized in that the trailer comprises at least one drive system according to any one or more of the preceding claims. Advantages of such a trailer correspond to the above-mentioned advantages of the drive system according to the present invention.

The trailer is preferably provided with at least one wheel on each longitudinal side of the trailer, wherein the trailer comprises at least one drive system according to the invention on both longitudinal sides of the trailer, which at least one drive system is (are) preferably placed in the direct vicinity of a respective wheel. Presence of at least one drive system on each of the two opposing longitudinal sides of the trailer highly increases the manoeuvrability of the trailer since by driving the systems 1 independently of each other a steering manoeuvre can be carried out in an easy manner.

In this respect it is further preferred if the at least one drive system on each longitudinal side of the trailer is designed such that all wheels located on the respective longitudinal side of the trailer become fully lifted off the supporting surface under the influence of movement of the drive element from its passive position to its active position. Because of this, the whole weight of the trailer rests on the drive elements, increasing the grip of the drive elements on the supporting surface. Also steering the trailer by independently driving the systems on both opposing longitudinal sides is improved. Furthermore, in combination with the above embodiment of a drive system having drive element which is pivotable about a second pivot axis, a very high manoeuvrability of the trailer is achieved, since in this case the trailer can also be moved in transverse direction using the drive systems. In case of a trailer which is equipped with a nose wheel that contacts the supporting structure, the manoeuvrability of the trailer is not significantly decreased because in general nose wheels can freely pivot about a vertical axis and furthermore the load on a nose wheel is very limited.

In order to further increase the manoeuvrability of the trailer, it is preferred if the chassis further comprises a drawbar provided with a nose wheel, wherein the trailer comprises an additional drive system according to the present invention near the nose wheel.

The present invention further relates to a method for manoeuvring a trailer according to present invention, comprising the step of moving the drive element of the drive system from its passive position to its active position, and of actuating the motor of the drive system while the drive element is in its active position so as to move the trailer. Advantages of such a method correspond to the above-mentioned advantages of the trailer and of the drive system according to the present invention.

The present invention will now be explained in more detail in the following description of a preferred embodiment of a drive system according to the present invention, in which reference is made to the following figures:
Figure 1a and 1b are schematic side views of a preferred embodiment of a trailer according to the present invention equipped with a preferred embodiment of drive systems according to the present invention, in two different operating conditions;
Figure 2a and 2b are schematic isometric views of the drive systems according to Figures 1 a and 1 b, respectively;
Figure 2c is a schematic isometric view of the drive systems in the orientation with respect to the trailer as shown in figure 4b;
Figure 3 is a schematic transparent side view of the drive system according to Figure 1 b;
Figure 4a is a schematic and part-transparent top view of part of the trailer according to Figure 1 b;
Figure 4b is a schematic bottom view of the trailer according to Figure 1b, with the drive systems in a different orientation with respect to the trailer, compared to figure 4a.

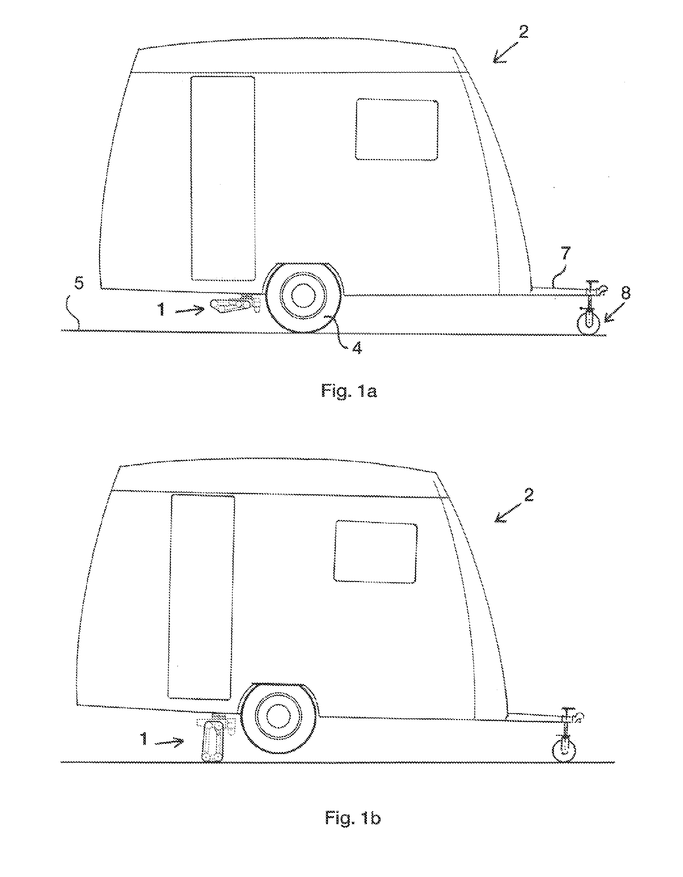

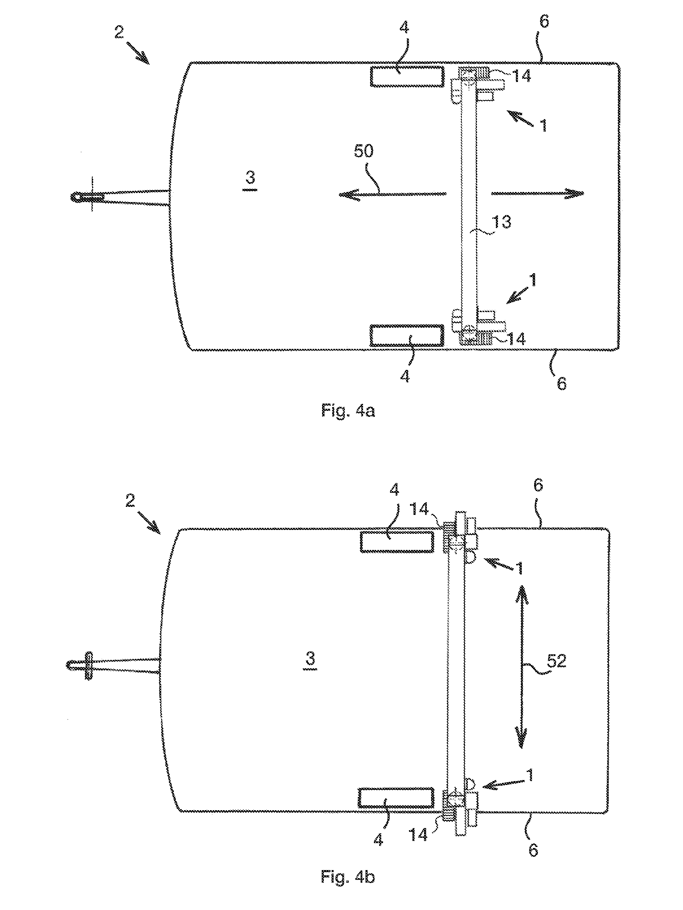

Figure 1 a and 1 b show schematically a trailer 2, more specifically in this example a single axle caravan 2 which is equipped with two drive systems 1. The caravan 2 has on both longitudinal sides 6 thereof (see also figure 4a) a wheel 4. On the forward-facing side of the caravan 2 a drawbar 7 is located on which a nose wheel 8 is provided. The nose wheel 8 is used to provide a third supporting point (further to the two wheels) when the caravan 2 is not coupled to a towing vehicle.

Two drive systems 1 are provided underneath the chassis of the caravan 2, one on each longitudinal side 6, directly behind the two respective wheels 4. Each drive system 1 comprises a drive element 14 for moving the caravan, as will be explained underneath. In figure 1a the drive elements 14 of both the drive systems 1 are in their passive position, in which the caravan 2 cannot be moved by means of the drive systems 1 but can be moved by e.g. a towing vehicle or by hand. In figure 1b the drive elements 14 of drive systems 1 are in their active position, in which the drive elements 14 contact a supporting surface 5. In this example the wheels 4 of the caravan 2 are fully lifted off the ground in the active position, although this is not required. As long as the friction between a drive element 14 of the system 1 and the supporting surface 5 is sufficiently large, the caravan 2 can be moved by means of the drive system 1. The caravan can be steered by independently actuating the drive elements 14 of the respective systems 1.

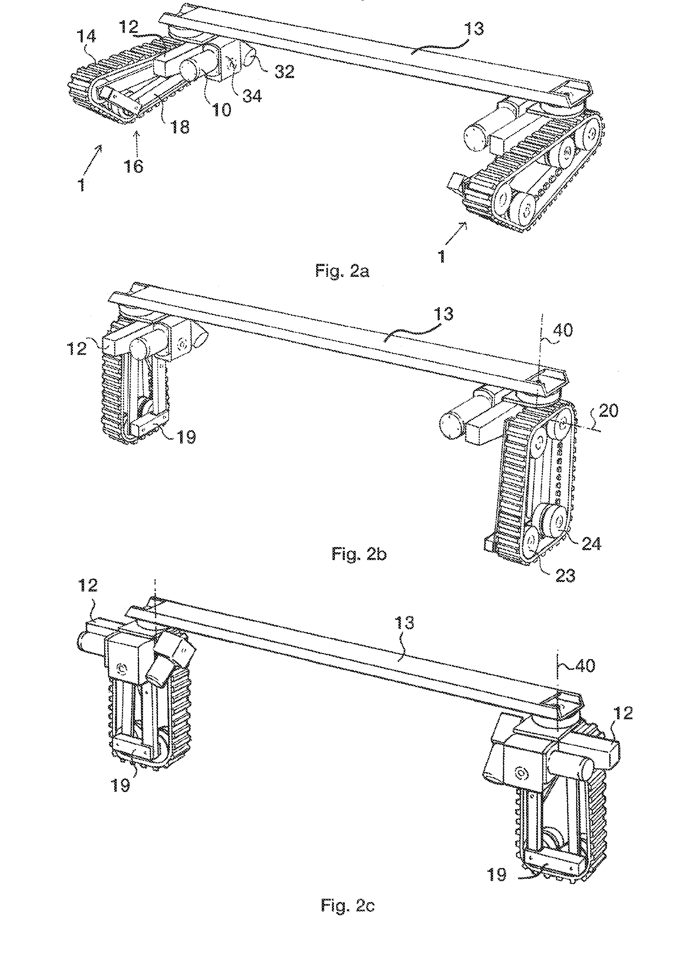

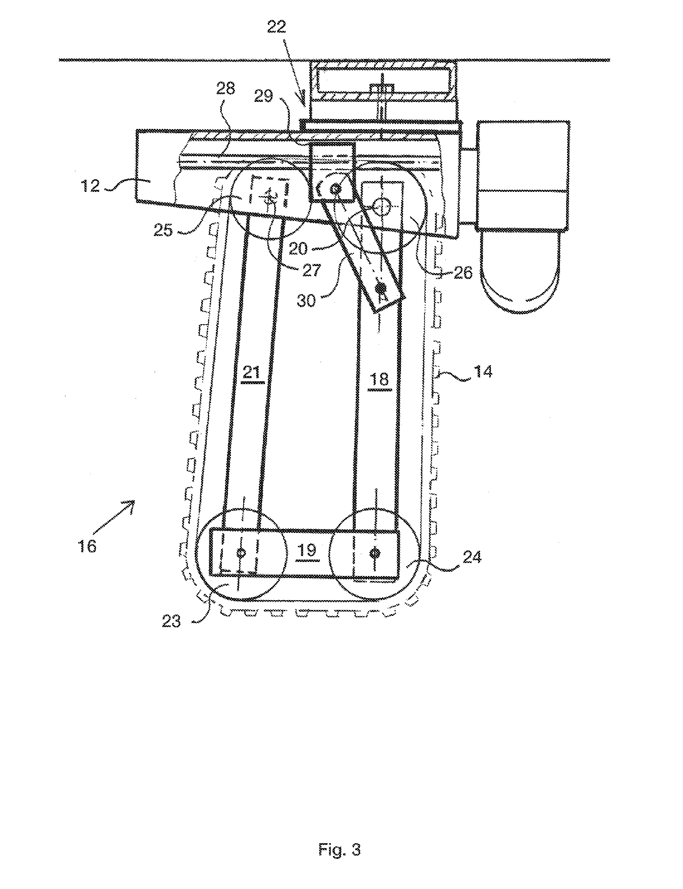

Figures 2a and 2b show the drive systems 1 of figure 1 a and 1 b with the respective drive elements 14 thereof in their passive position and active position, respectively. Figure 3 more clearly shows the construction of a drive system 1. The drive system 1 comprises a fixed frame part 12 that is connected to a transverse bar 13. Bar 13 can be a part of the chassis 3 (schematically indicated in figure 4a) of the caravan, but it can also be a separate constructional component associated with the drive system 1, alternatively. The combination of two drive systems 1 and the transverse bar 13 could be mounted as a retrofit to the underside of a trailer. Drive system 1 is pivotally connected to bar 13 about a vertical pivot axis 40, at least in the mounted condition of the system on the caravan. Consequently the drive system 1 can be pivoted about axis 40 between an orientation parallel to the wheels of the caravan as shown in figures 2a and 2b and an orientation transverse to the wheels, as will be further explained underneath and as shown in figure 2c. The system pivoting means for pivoting system 1 about axis 40 are not shown, but can for example be constituted by a rotatable pin-lock indexing mechanism, a gear mechanism integrated in the coupling between fixed part 12 and bar 13, or by a steering linkage type system, preferably connecting two opposite systems 1 so that the pivoting of both systems is made dependent on each other. The system pivoting means may comprise a motor for actuation thereof or be adapted to be actuated by hand. In this respect it is noted that by vertical and horizontal is meant the orientation of respective axes when the drive system 1 is mounted on a trailer 2, wherein the trailer is located on a horizontal supporting surface. Hence a vertical axis extends in principle perpendicular to the trailer chassis and a horizontal axis extends in principle parallel to the trailer chassis.

In order to adjust the overall height of the system 1, more in particular the vertical distance from bar 13 to the ground-contacting part of belt 14 (in the active position thereof) an additional height-adjustment element might be mounted in between movable part 16 of the frame and the part of the frame adapted to be fixed to the chassis of the trailer. An example of such a height-adjustment element is a threaded vertically extending cylindrical part that is fixed on top of the fixed frame part, wherein a block having an inner thread is fixed to the chassis, for example to bar 13, so that the frame of the system 1 can be screwed into the block so as to adjust the overall height thereof. Preferably blocking means are provided such that the frame can be positioned at a desired angular position with respect to the chassis at the desired height, for example the transverse position of the frame (and belt 14) as shown in figures 2c and 4b. Hence the above system pivoting means are at least in this example integrated in the height adjustment means. An advantage of said height adjustment means is that the system 1 can be easily adapted to trailers having various ground clearance (vertical distance from chassis to supporting surface).

The drive system further comprises a movable frame part 16 which is pivotally connected to the fixed frame part 12 about horizontal axes 20 and 27. Movable frame part 16 comprises an elongate first arm 18, which is pivotally connected to fixed frame part 12 about horizontal axis 20 with an upper, first end portion thereof. A first pulley 24 is rotatably provided at a lower, second end portion of the arm 18. A second pulley 26 is rotatably provided about axis 20, at the first end portion of the arm 18. The movable part 16 further comprises an elongate third arm 21, which is provided spaced apart from arm 18. Third arm 21 is pivotally connected to fixed frame part 12 about an horizontal axis 27 at an upper end portion thereof. A third pulley 23 is rotatably provided at a lower end portion of arm 21 and a fourth pulley 25 is rotatably provided about axis 27, at the upper end portion of third arm 21. A connecting arm 19 is pivotally connected to the lower end portions of arms 18 and 21, respectively, about respective horizontal axes which preferably are the axes of rotation of pulleys 23, 24. The movable frame part 16 is designed such that arms 18 and 21 extend in vertical direction and substantially parallel in the active position of the drive element 14. Furthermore the connecting arm 19 extends substantially horizontal in that position. By adjusting the system height using the height adjustment means the angular position of arm 18 in which the pulley 24, i.e. the belt 14 at the location of pulley 24, just contacts the ground (upon pivoting from the passive to the active position) can be adjusted. Pivoting from this intermediate position to the active position causes the wheel of the trailer to be lifted off the ground, or at least the chassis of the trailer is lifted, in case of a wheel having a suspension stroke.

A toothed belt 14 is passed over said four pulleys 23-26. Belt 14 is provided with a tooth profile at its inner side, i.e. the side facing the pulleys 23-26. See figure 2b. Pulley 26 has a tooth profile corresponding to the tooth profile on belt 14. Pulley 26 is operatively connected to a motor 10 via a worm reduction gear 34. Motor 10 is operatively connected to a power source, preferably a battery provided on the trailer 2. Further control means are provided for actuating the motor 10. Pulley 26 can be rotated by (electrically) actuating motor 10 and consequently belt 14 can be moved over the four pulleys 23-26 so as to move the trailer 2, at least in the active position as shown in figure 1b (and 2b and 2c). In this respect it is remarked that presence of third arm 21 and third pulley 23 (and pulley 25) is in principle not required. Presence of third pulley 23, which is on the same level as first pulley 24, results in an increased ground-contacting surface of belt 14, which increases the grip of belt 14 on the supporting surface 5. Furthermore presence of third arm 21 and also connecting arm 19 increases the stiffness and stability of the drive system 1.

Pivoting means 22 are provided comprising a screw spindle 28, 29 that is rotatably provided on fixed frame part 12, about its central axis. At one, free end (left side in figure 3) the spindle 28 is rotatably positioned using an axial bearing. Pivoting means 22 further comprise a further motor 32 to which spindle 28 is operatively connected with its opposite free end so that by actuating motor 32 the spindle 28 can be rotated such that a nut 29 travels along the spindle 28. The nut has a flat upper side, which is in sliding contact with a guide strip on a wall part of fixed part 12 so that rotation of nut 29 about the spindle 28 is prevented. A second arm 30 is provided, which is with a first end portion thereof pivotally connected to the nut about a horizontal pivot axis. Arm 30 is pivotally connected to the first arm 18 with an opposite, second end portion thereof, about a horizontal axis. Hence the movement of the nut 29 along the spindle 28 causes the first arm 18 to pivot. Consequently the belt can be lowered from its passive position as shown in figure 2a, in which position the system 1 is substantially flat, directly underneath the bottom side of the caravan 2, to its active position as shown in figure 2b. Forces transferred by arm 30 to nut 29 act upon said guide strip, hence bending of the spindle 28 resulting from said forces is effectively prevented. Alternatively an hydraulic or pneumatic cylinder-piston combination or a manually operated screw spindle can be used to pivot the first arm 18, for example.

Figure 4a shows the combination as shown in figure 2b mounted under a caravan 2, seen from the top side. The drive belts 14 are oriented such that the caravan 2 can be moved in its longitudinal direction 50 when de motor 10 is actuated. By reversingly actuating motor 10 the caravan can be moved forward or backward, at the choice of the operator of systems 1. By moving one of the two belts 14 of the respective drive systems 1 faster over the pulleys than the other of the two belts 14, a steering movement of the caravan 2 can be realised. As mentioned above the drive systems 1 are both pivotable about respective axes 40. They are adapted to be pivoted over at least an angle of 90 degrees so that the drive belts 14 can be oriented such that they extend in transverse direction 52 of trailer 2 as is shown in figures 2c and 4b. When the drive belts 14 are both oriented in transverse direction 52 the trailer 2 can be moved in its transverse direction, which is very convenient in case of limited manoeuvring space. In this case it is highly preferred that both drive systems 1 operate identically, i.e. the drive belt orientation and speed is preferably equal. It is further preferred to pivot the drive systems 1 about respective axes 40 when the respective drive elements are in their passive position. In case of transverse orientation of the drive elements 14 it is further highly preferred that the wheels 4 of the caravan 2 become fully lifted off the ground when the drive elements are moved from their passive to their active position, since otherwise contact of the tyres of the caravan with the supporting surface blocks or at least decreases the transverse movement of the caravan 2 due to the longitudinal orientation of the tyres.

Additionally a further drive system 1 can be provided on the trailer 2, preferably near nose wheel 8. Especially when the drive systems 1 are oriented in transverse direction the use of the further drive system 1, also oriented in its transverse direction, results in a higher degree of control of the transverse movement of the trailer 2. In this respect it is noted that such a further drive system near the nose wheel 8 can be constructed more simple since the vertical load of the trailer at said point is significantly smaller. Hence a single pivoting arm similar to arm 18, provided with a wheel at its lower end, which can be driven by a motor, and oriented in transverse direction would in principle suffice.

An additional advantage of the drive systems 1 is that they can also be used as jack in case a wheel of the trailer 2 needs to be replaced. They can further be used as levelling devices, which is especially advantageous in case of the use of a caravan on uneven grounds, e.g. on a campsite. This can be achieved by first rotating the spindle 28 (or alternative pivoting means) such that the drive element 14 just contacts the supporting surface. The trailer will be lifted slightly in case the spindle is rotated slightly further. Hence by actuating both drive systems 1 independently of each other the trailer can be lifted further off the ground on one longitudinal side and thereby the trailer is levelled in an easy manner.

In case of use of a system according to the present invention on a market trailer, it would in some cases suffice to only provide for transverse movement of the trailer using the systems, which systems are preferably provided on all four corners of the trailer.

## Claims

1. A drive system (1) for manoeuvring a trailer (2), the trailer comprising a chassis (3) and at least two wheels (4) for supporting the trailer on a supporting surface (5), wherein the drive system comprises a frame comprising a fixed frame part (12) for connecting the system to the chassis of the trailer and a movable frame part (16) which is movably connected to the fixed frame part, a motor (10), and a drive element (14) that is operatively connected to the motor for manoeuvring the trailer, which drive element is connected to the movable frame part (16) and which is movable with respect to the fixed frame part from a passive position to an active position, in which active position the drive system is usable for moving the trailer, **characterized in that** the drive element (14) is adapted to contact the supporting surface (5) in the active position for transmitting motive power from the motor (10) to the supporting surface for moving the trailer (2), in a connected state of the system (1) on the trailer.

2. A drive system according to claim 1, **characterized in that** the drive element (14) is adapted to be orientable such that the trailer (2) is movable in its longitudinal direction, in the active position of the drive element.

3. A drive system according to any one of the preceding claims, **characterized in that** the drive element (14) is adapted to be mounted in the direct vicinity of a wheel (4) of the trailer (2).

4. A drive system according to any one of the preceding claims, **characterized in that** the drive element (14) comprises an endless toothed belt (14).

5. A drive system according to any one of the preceding claims, **characterized in that** the movable frame part (16) comprises a first arm (18) which is pivotally connected about a first horizontal pivot axis (20), to the fixed frame part (12) with a first end portion thereof, wherein the drive element is connected to a second, opposite end portion of the first arm (18) and wherein the drive system comprises pivoting means (22) for pivoting the first arm about the first pivot axis such that the drive element is pivotable between its passive position and its active position for providing contact between the drive element and the supporting surface in the active position of the drive element.

6. A drive system according to claim 4 and 5, **characterized in that** the belt (14) is at least passed over a first pulley (24), which is rotatably connected to the second end portion of the first arm (18), and over a second pulley (26), which is rotatably provided near the first end portion of the first arm and which is operatively connected to the motor (10), so that the belt can be moved over the first and second pulley for moving the trailer, in the active position of the drive element.

7. A drive system according to claim 5 or 6, **characterized in that** the pivoting means comprise a screw spindle (28) that is connected to the fixed frame part (12), spindle rotating means for rotating the spindle such that the nut (29) travels along the spindle, and a second arm (30), which is pivotally connected to the nut with a first end portion thereof, and which is pivotally connected to the first arm (18) with a second, opposite end portion thereof, such that the movement of the nut (29) along the spindle (28) causes the first arm (18) to pivot.

8. A drive system according to any one of the preceding claims, **characterized in that** the drive element (14) is adapted to be pivotally connected to the trailer chassis about a second pivot axis (40), wherein the drive element is pivotable from a first position, in which the drive element can move the trailer in the longitudinal direction thereof, in the active position of the drive element, to a second position, in which the drive element can move the trailer in the transverse direction thereof, in the active position of the drive element.

9. A trailer (2), in particular a caravan, comprising a chassis and at least two wheels (4) for supporting the trailer on a supporting surface (5), **characterized in that** the trailer comprises at least one drive system (1) according to any one or more of the preceding claims.

10. A trailer according to claim 9, **characterized in that** at least one wheel (4) is provided on each longitudinal side (6) of the trailer (2), wherein the trailer comprises at least one drive system (1) according to any one of the preceding claims 1-8 on both longitudinal sides (6) of the trailer, which at least one drive system is (are) preferably placed in the direct vicinity of a respective wheel (4).

11. A trailer according to claim 10, **characterized in that** the at least one drive system (1) on each longitudinal side (6) of the trailer (2) is designed such that all wheels (4) located on the respective longitudinal side of the trailer become fully lifted off the supporting surface (5) under the influence of movement of the drive element (14) from its passive position to its active position.

12. A trailer according to claim 9, 10 or 11, the chassis of which further comprises a drawbar (7) provided with a nose wheel (8), and **characterized in that** the trailer (2) comprises an additional drive system (1) according to any one of the claims 1-8 near the nose wheel (8).

13. Method for manoeuvring a trailer according to any one or more of the claims 9-12, comprising the steps of:
- moving the drive element (14) of the drive system (1) from its passive position to its active position, and
- actuating the motor (10) of the drive system while the drive element is in its active position so as to move the trailer (2).
